# EUROPEAN PATENT SPECIFICATION

(11) **EP 3 737 892 B1**
(45) Date of publication and mention of the grant of the patent: **20.03.2024**
(21) Application number: 19701146.3
(22) Date of filing: 10.01.2019
(51) Int. Cl.: F24H 9/14, F16L 11/04, F16L 11/08, F16L 11/11, F24D 3/10

(54) **HYDRAULIC CONNECTION BODY**
HYDRAULISCHER ANSCHLUSSKÖRPER
CORPS DE RACCORDEMENT HYDRAULIQUE

(30) Priority: 11.01.2018 IT 201800000748
(43) Date of publication of application: 18.11.2020
(73) Proprietor: ELBI International S.p.A., 10129 Torino (IT)
(72) Inventor: AITA, Luigi, 10090 Gassino Torinese (Torino) (IT); MAGNONE, Luca, 10025 Pino Torinese (Torino) (IT)
(74) Representative: Vanzini, Christian
(86) International application number: PCT/IB2019/050180
(87) International publication number: WO 2019/138347

(56) References cited:
- EP-A2- 1 031 795
- EP-A2- 2 148 149
- WO-A1-2012/140584
- WO-A2-2010/098657
- DE-A1- 2 832 356
- FR-A1- 2 532 724
- JP-A- 2010 276 278
- US-A- 5 284 204
- US-A1- 2011 042 468

## Description

The present invention generally concerns hydraulic groups for heating apparatuses.

Such heating apparatuses may be, for example: boilers, including systems that burn both solid and liquid and gaseous fuels, closed fireplaces, heat pumps, electric and/or gas water heaters for the production of sanitary hot water only, thermal storage tanks, including those using renewable energy sources such as solar or geothermal energy, or a heat storage exchanger, apparatuses for district heating.

More specifically, the present invention concerns a heating apparatus comprising
a heat exchanger, and
a hydraulic connection body of a hydraulic group, said hydraulic connection body being on the one side connected to the heat exchanger of the heating apparatus (generally called a primary exchanger to be considered as the heat source in the various heating apparatuses) and being on the other side adapted to be connected to an external hydraulic system,
wherein the hydraulic connection body comprises a system-side duct, fixed in a connection point of the heating apparatus and adapted to be fluidically connected to the external hydraulic system, and an exchanger-side duct connected to the heat exchanger.

The external hydraulic system (intended as external to the heating apparatus) may be a heating user system (as in boilers), or it may be a sanitary hot water system comprising a water distributing system that supplies water to the heating apparatus, and a sanitary hot water user system that receives water from the heating apparatus (as in water heaters).

The hydraulic connection body may be a heating water return body or a heating water delivery body of the hydraulic group.

In the hydraulic connection body there may be only one system-side duct in the case wherein the hydraulic connection body is intended to be fluidically connected to a heating user system or to a sanitary hot water system, or there may be two system-side ducts if the hydraulic connection body is intended to be fluidically connected to both systems.

In general, different boiler models may have different positioning points for the fittings intended to connect the boiler to the domestic heating system (or heating user system) and possibly to the sanitary hot water system, as well as different inner boiler layouts for connecting the water heating duct to the primary heat exchanger. This means that a hydraulic group suitable for a boiler model with a certain configuration of the fitting positioning points, or with a given inner layout of the components, is not suitable for another boiler model with a different mutual distance of the fittings or, respectively, with a different inner layout. This is not desirable from an industrial point of view.

Similar problems may occur with other types of heating apparatuses.

DE 2832356 A1 discloses a device for connecting rigid water tubes to a boiler. Such a device comprises a support for the boiler, on which there are arranged flexible tubes connected to the boiler and other systems. WO 2010/098657 A2 discloses flexible tubes for connecting a boiler to external ducts.

One purpose of the present invention is thus to make available a hydraulic group that may be mounted on heating apparatuses with different configurations of ducts intended to connect the heating apparatus to the sanitary hot water distribution system (where such a connection is required) and to the heating user system. Another aim is to make available a hydraulic group that may be mounted on heating apparatuses with different inner layouts. Such a hydraulic group would obviously be more versatile than conventional hydraulic groups.

According to the invention, a heating apparatus as defined in claim 1 or in claim 2 is thus proposed, wherein at least one of the ducts of the hydraulic connection body is made as a flexible tube, at least in part made of insulating material, wherein the exchanger-side duct is formed as a flexible tube at least partially of insulating material.

In particular, the insulating material is a thermally insulating or electrically insulating material. Such insulating material is a polymeric material, preferably a non-elastomeric plastic material. As is well known, polymeric materials are thermosetting plastics, thermoplastics and elastomers.

In some embodiments, the ducts made as flexible tubes may have a multi-layer structure. In this case, the flexible tubes may comprise at least one corrugated layer and/or at least one braided layer.

In general, flexible tubes capable of being bent with a bending radius, measured at the innermost radial point of the transverse perimeter of the tube, comprised between 0.5 and 2 times the diameter of the tube, without changing the flow passage section of the tube at the bend, are preferred.

More preferably, the inner tubular core is made as a corrugated tube and the outer tubular casing is made as a braided plastic tube. Such a configuration allows one to achieve a high flexibility of the ducts, while limiting the risks of throttling with bending radii in the range as defined above.

According to some embodiments, a hydraulic connection body may be provided with one or more flexible tubes with different outer colorings, motifs, pictograms or writings depending on the function of the tube. This allows the installer or maintenance technician to immediately recognize how to make the required connections, or in general the user to learn information about the tube, its function, its features or the fluid processed therein from the outer appearance of the same tube. Advantageously, such colorings may be obtained by coloring the strands of the braid or by weaving colored motifs during the step of making the braid, in the case of a braided tube, or by loading the plastics or rubbers with pigments, or by painting the outer layer of the tube.

According to some embodiments, the hydraulic connection body comprises at least one temporary attachment formation provided for the attachment of a free portion of the flexible tube(s) when the hydraulic connection body is in a packing condition or in any case when transporting or delivering the heating apparatus before installation. This temporary attachment formation is obtained or mounted on the hydraulic connection body or on a bracket to which the hydraulic connection body is fixed.

For the purposes of the present invention, "free portion" means an intermediate or end portion of the tube separated from the end of the flexible tube mechanically and fluidically connected to the hydraulic connection body.

In particular, the temporary attachment formation is adapted to engage, with force or form coupling, at least one of an outer surface and an inner surface of the free portion of the flexible tube. In the first case, the temporary attachment formation may, for example, be made as a fork or hook intended to receive the outer lateral surface of the flexible tube, or a collar intended to be coupled to one free end of the flexible tube at the front. In the second case, it may be made, for example, as a plug intended to be connected at the front to a free end of the flexible tube. More generally, temporary attachment formations may be permanently arranged on the hydraulic connection body, or may be connected thereto in a removable way, for example by means of screw connections, snap connections, tear-away connections with preferential points of breakage (tabs) or micro hooks (e.g. Velcro^{®}).

The flexible tubes may be assembled to the hydraulic connection body as part of the hydraulic group manufacturing process, and thus before installation on the heating apparatus.

For the subsequent handling, packaging and transport of the complete group of tubes, the flexible tubes are temporarily attached on the temporary attachment formations that keep the same tubes in the collected position and ensure the protection thereof.

For assembling the group in the boiler, or more generally in the heating apparatus, one proceeds with the release from the temporary attachment, at the limit the removal of the attachment system from the hydraulic connection body or from the bracket to which the hydraulic connection body is fixed, and the connection of the distal ends of the tubes to the respective components, thus reducing the connection time necessary to assemble conventional rigid tubes. A hydraulic group that is more functional in terms of handling, packaging and transport is thus made available.

Advantageously, the use of flexible tubes reduces any vibrations and noise generated by pumps or fans that may affect the complete apparatus.

Further features and advantages of the invention will become apparent from the detailed description that follows, provided purely by way of non-limiting example with reference to the accompanying drawings, wherein:

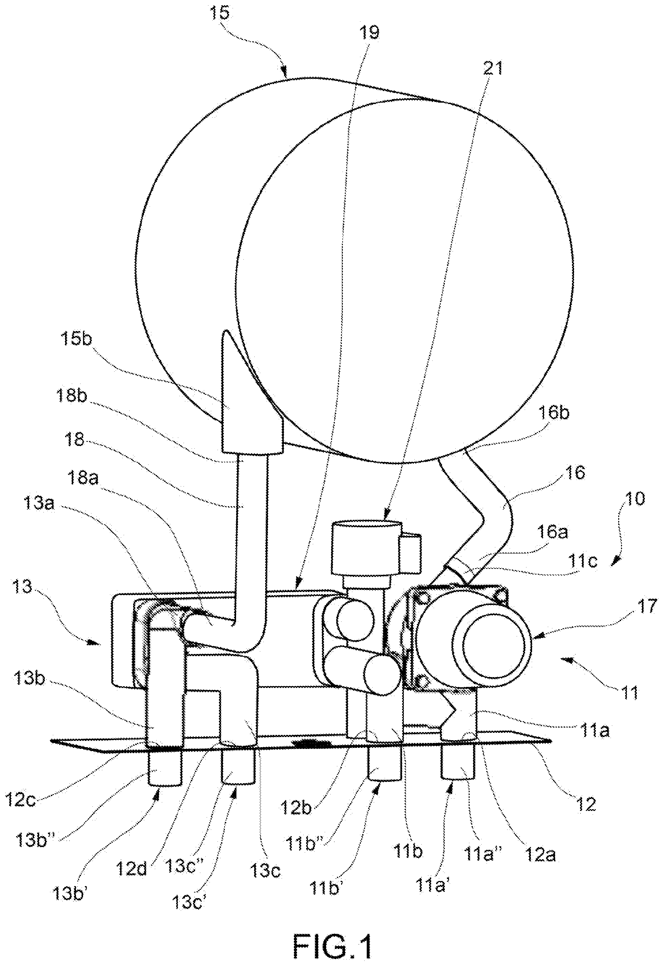

figure 1 is a simplified perspective view of a hydraulic group according to the invention, connected to a primary heat exchanger of a boiler;
figure 2 shows a hydraulic diagram of the hydraulic group shown in figure 1;
figure 3 is a perspective view of the single hydraulic group;
figure 4 is a perspective view of the hydraulic group, provided with attachment formations for flexible tubes; and
figure 5 is a perspective view representing the connection of the hydraulic group to the primary heat exchanger;
figure 6 shows a flexible tube.

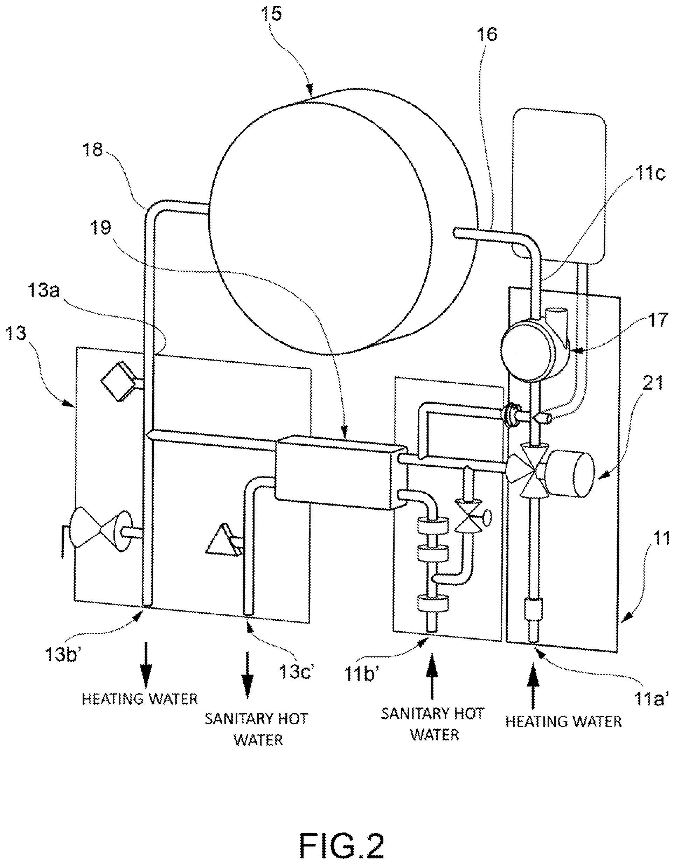

With reference to the figures, a hydraulic group for a domestic boiler is represented, indicated collectively at 10. For simplicity, in the figures only the components concerned with the purposes of the present description are represented schematically. Figure 2 illustrates, by way of illustration, the ducts and devices that are normally part of such components. Where described, such ducts and devices will be discussed only to the extent concerned by the present invention. The following description is made, for illustrative simplicity, with reference to a domestic boiler. As one may appreciate, it may be used in any heating apparatus equipped with a heat exchanger (for example, an apparatus of the type described at the beginning) and provided to supply heating or sanitary hot water, through the transport of hot water, to a user system.

The hydraulic group 10 comprises a heating return body 11 and a heating delivery body 13, adapted to be connected on the one side to a primary heat exchanger 15 of the boiler and on the other to a domestic heating system (not shown) and to a sanitary hot water system (not shown). In a fully conventional way, domestic heating water passes through the domestic heating system to deliver to domestic heating devices, such as radiators, the water which is heated in the primary heat exchanger 15 of the boiler. Likewise conventionally, the sanitary hot water system comprises a hydraulic source, for example a water distribution network, for the delivery of potable water to the boiler, and a sanitary hot water distribution network that receives heated potable water from the boiler.

As used in the present, the term "body" does not necessarily mean a monolithic body, but rather may also mean a body made up of several parts assembled together, or even a body made up of several separate parts.

The heating return body 11 comprises two system-side ducts 11a and 11b, namely a domestic heating water inlet duct 11a, adapted to be fluidically connected to an outlet of the domestic heating system, and a sanitary hot water inlet duct 11b adapted to be connected to the water distribution network. The heating return body 11 further comprises a heating water outlet 11c suitable to be connected to an inlet 15a of the primary heat exchanger 15, via a heat exchanger-side duct 16, which in the following will be specifically referred to as water heating outlet duct 16.

The domestic heating water inlet duct 11a and the sanitary hot water inlet duct 11b have respective distal ends 11a', 11b' suitable to be fixed in respective through holes 12a, 12b obtained in a bracket or lower casing part 12 of the boiler. The distal ends 11a", 11b" of the ducts 11a, 11b are equipped with respective connection means 11a", 11b", for example threads, for the connection to the sanitary hot water distribution system and, respectively, to the domestic heating system.

The heating delivery body 13 comprises a domestic heating water inlet 13a adapted to be fluidically connected to an outlet 15b of the primary heat exchanger 15, via an exchanger-side duct 18, which in the following will be referred to as water heating inlet duct 18. The heating delivery body 13 further comprises two system-side ducts 13b and 13c, namely a domestic heating water outlet duct 13b, adapted to be fluidically connected to an inlet of the domestic heating system, as well as a sanitary hot water outlet duct 13c adapted to be connected to an inlet of the sanitary hot water distribution system.

The domestic heating water outlet duct 13b and the sanitary hot water outlet duct 13c have respective distal ends 13b', 13c' suitable to be fixed in respective through holes 12c, 12d obtained in the bracket or lower casing part 12 of the boiler. The distal ends 13b', 13c' of the ducts 13b, 13c are equipped with respective connection means 13b", 13c", for example threads or quick-coupling systems, for the connection to the sanitary hot water distribution system and, respectively, to the domestic heating system.

The hydraulic group 10 further comprises a domestic heating water circulation pump 17, which in the example shown is mounted on the heating return body 11. According to other embodiments, the pump could be separate from the hydraulic group. According to further embodiments, the pump could be integrated into the hydraulic group. "Integrated" means both fully integrated (i.e. with the pump body fully integrated) as well as partially integrated (i.e. with the pump body partially integrated) in the hydraulic body.

The hydraulic group 10 further comprises a secondary heat exchanger 19 provided for heat exchange between domestic heating water and sanitary hot water, which in the example shown is mounted between the heating return body 11 and the heating delivery body 13. According to alternative embodiments, not shown, the secondary heat exchanger could be incorporated into the structure of the primary heat exchanger. According to other embodiments, the secondary heat exchanger could be absent, or external to the boiler.

The hydraulic group 10 further comprises motorized valve means 21 provided to selectively control the feed of domestic heating water to the domestic heating system and to the secondary heat exchanger 19. In the example shown, the valve means are mounted on the heating return body 11.

At least one of the ducts indicated above, i.e. the domestic heating water inlet duct 11a, the sanitary hot water inlet duct 11b, the water heating outlet duct 16, the water heating inlet duct 18, the domestic heating water outlet duct 13b and the sanitary hot water outlet duct 13c, is made as a flexible tube at least in part of insulating material. In this way, the hydraulic group may adapt to different configurations of the inner connections of the boiler, and/or to different configurations of the connections outside the boiler.

Moreover, the presence of flexible tubes allows the transmission of vibrations generated at the pump or at the fan of the boiler (not shown) to be reduced.

Advantageously, a thermal insulating material allows the heat dissipation through the walls of the ducts to be reduced, while an electrical insulating material allows electrical dispersion between the components to be avoided.

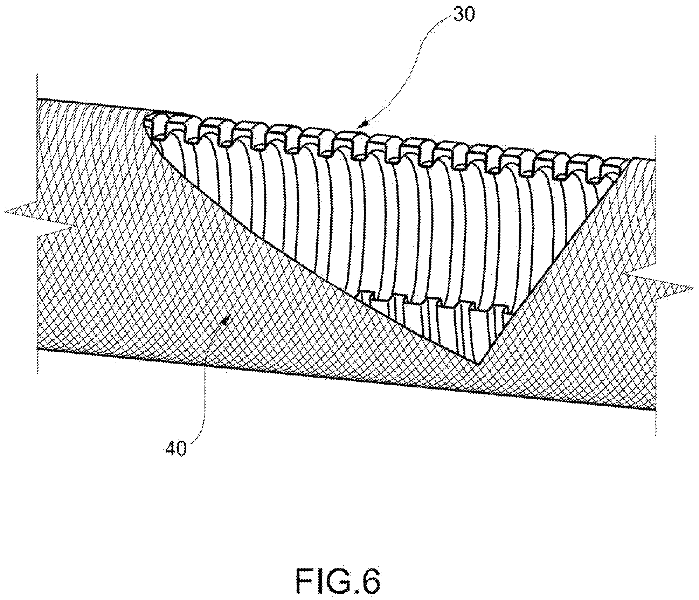

Preferably, the flexible tubes are made as a flexible tube with an inner tubular core 30 made of plastic material and an outer tubular casing 40 (see figure 6). More preferably, the inner tubular core 30 is made as a corrugated tube and the outer tubular casing 40 is made as a braided plastic casing.

In another preferred embodiment, the flexible tubes are made as a flexible tube with one or more layers of polymeric material (plastic, rubber or silicone), wherein within one of them, or between at least two of them or on the surface of one of them, there is at least one layer of material, braided, woven or wound. This material may also be a single filament. Such braided, woven or wound material may be made of metallic material (e.g. non-exclusively steel), plastic material (e.g. non-exclusively nylon) or a combination of plastic and metallic materials.

If the flexible ducts are those for sanitary hot water, the part of such ducts in contact with the water must be made of a material suitable for use in potable water and resistant to the temperatures generated in the duct.

If the flexible ducts are those for the transport of water between the hydraulic group and the boiler, the part of such ducts in contact with the water must be made of material suitable for use in contact with the additives present in the heating circuits and resistant to the temperatures that are generated in the tubes.

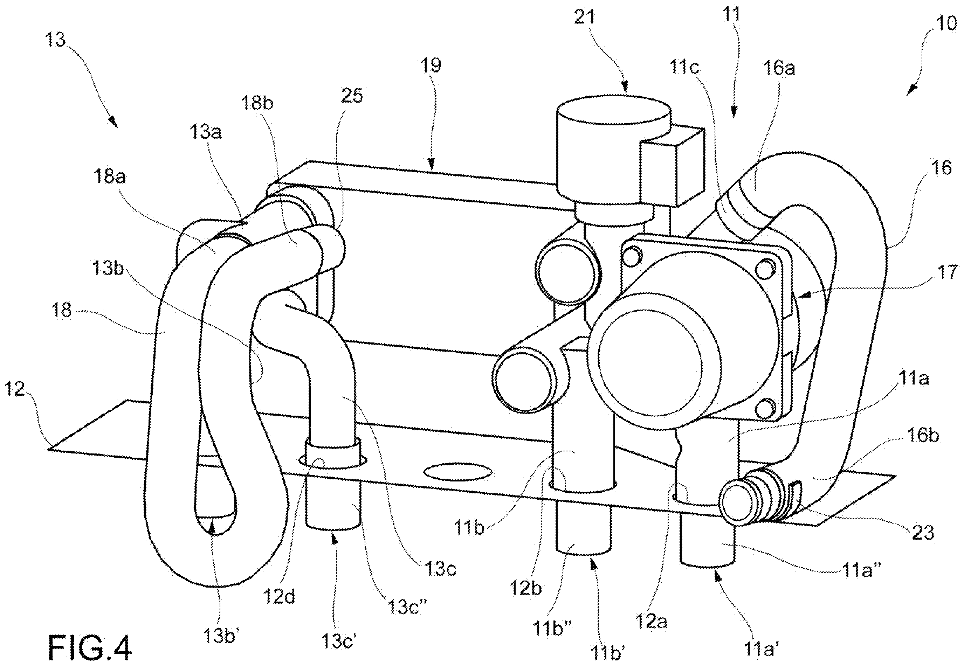

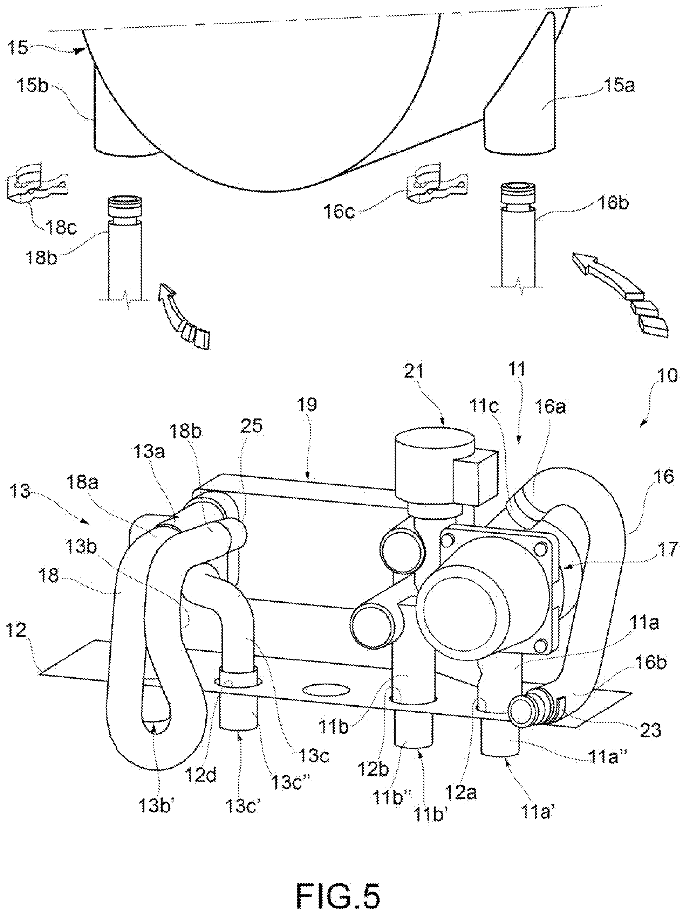

With reference to figures 4 and 5, an advantageous way to treat the flexible ducts described above is described, discussed with reference to the water heating ducts 16 and 18 that transport water between the hydraulic group 10 and the primary exchanger 15. It is understood, however, that such measure is also applicable to other ducts, if they are made flexible.

Each tube 16 and 18 has a respective proximal end 16a and 18a fixed to the respective seat 11c and 13a on the hydraulic group 10, preferably with quick-coupling systems. Alternatively, other fastening methods are possible, e.g. screw fastening, or clamps, or even material-coupling attachment methods. Attachment systems are possible that allow tubes 16 and 18 to rotate relative to their respective seats 11c and 13a, around their respective longitudinal axes.

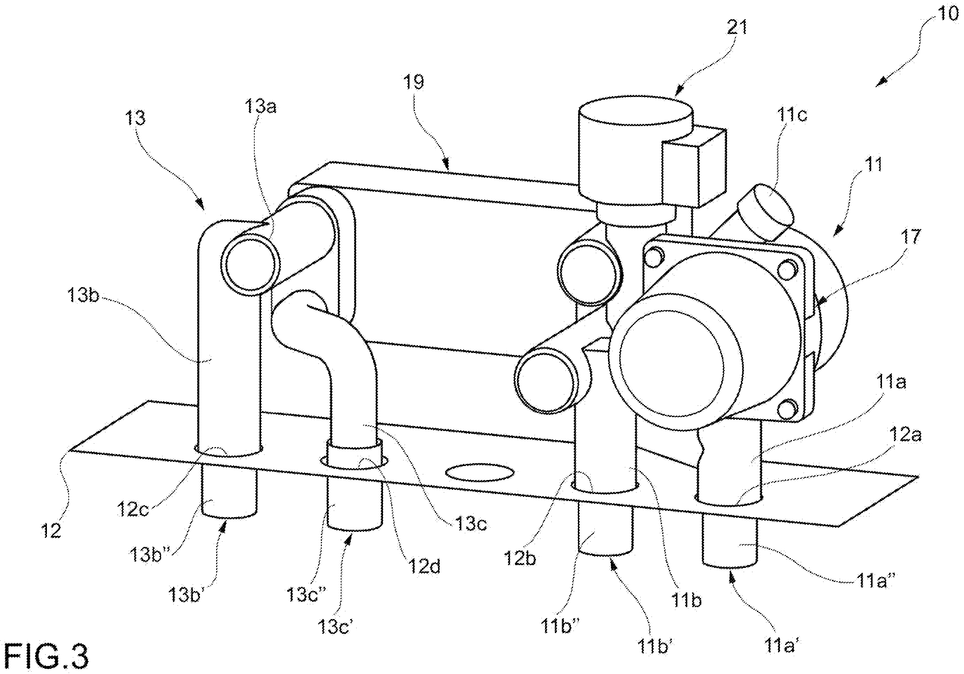

Each tube 16 and 18 has a respective distal end 16b and 18b fixed to a respective seat 15a and 15b on the primary heat exchanger 15, preferably with quick-coupling systems, such as bayonet, clip, threaded or other systems. In the example shown in figure 3, the distal ends 16b and 16c are attached to the seats 15a and 15b using the respective elastic clips 16c and 18c.

The hydraulic group 10 further comprises two temporary attachment formations 23 and 25 for the attachment of the distal ends 16b and 18b of the flexible tubes 16 and 18 when the hydraulic group 10 is in a packing condition, i.e. a condition wherein the hydraulic group 10 is packaged for its subsequent transport and storage.

The temporary attachment formations 23 and 25 are adapted to engage with force or form coupling at least one of an outer surface and an inner surface of the respective distal ends 16b and 18b of the flexible tubes 16 and 18. In the example shown, the temporary attachment formation indicated at 23 is a C or fork formation that engages the outer lateral surface of the respective tube 16 with form coupling, while the temporary attachment formation indicated at 25 is a plug (not visible) that engages the inner surface of the respective tube 18 at the front with form coupling.

In the example shown, the temporary attachment formation indicated at 23 is obtained on the bracket 12. The attachment formation 25 is, on the other hand, obtained on the heating delivery body 13. Naturally, other arrangements are possible, e.g. both the attachment formations on the bracket, or one attachment formation on the heating return body 13 and one attachment formation on the heating delivery body 15.

The aforesaid attachment formations may be obtained either integrally with the respective supports or mounted thereon. Moreover, the attachment formations may be permanently arranged or removed so that they may be disposed of after their function has been completed.

Naturally, without altering the principle of the invention, the embodiments and the details of construction may vary widely with respect to those described and illustrated purely by way of non-limiting example, without thereby departing from the scope of the invention as defined in the accompanying claims.

## Claims

1. Heating apparatus, comprising
a bracket or lower casing part (12),
a heat exchanger (15), and
a hydraulic group comprising a hydraulic connection body (13), said hydraulic connection body being on one side connected to the heat exchanger (15) and being on the other side adapted to be connected to an external hydraulic system,
wherein the hydraulic connection body (13) comprises a system-side duct (13b; 13c) adapted to be fluidically connected to the external hydraulic system, and an exchanger-side duct (18) connected to the heat exchanger (15),
wherein the hydraulic connection body is a heating delivery body (13) of the hydraulic group, wherein the exchanger-side duct is a water heating inlet duct (18) fluidically connected to an outlet (15b) of the heat exchanger (15),
wherein the system-side duct comprises:
- a heating water outlet duct (13b) adapted to be fluidically connected to an inlet of a heating user system, said heating water outlet duct (13b) having a distal end (13b') fixed in a through hole (12c) obtained in the bracket or lower casing part (12) of the heating apparatus, said distal end (13b') being equipped with connection means (13b") for connection to the heating user system, or
- a sanitary hot water outlet duct (13c) adapted to be fluidically connected to an inlet of a sanitary hot water user system, said sanitary hot water outlet duct (13c) having a distal end (13c') fixed in a through hole (12d) obtained in the bracket or lower casing part (12) of the heating apparatus, said distal end (13c') being equipped with connection means (13c") for connection to the sanitary hot water user system,
wherein at least one of said ducts (13b; 18; 13c) is formed as a flexible tube at least partially of insulating material, wherein the exchanger-side duct (18) is formed as a flexible tube at least partially of insulating material.

2. Heating apparatus, comprising
a bracket or lower casing part (12),
a heat exchanger (15), and
a hydraulic group comprising a hydraulic connection body (11), said hydraulic connection body being on one side connected to the heat exchanger (15) and being on the other side adapted to be connected to an external hydraulic system,
wherein the hydraulic connection body (11) comprises a system-side duct (11a; 11b) adapted to be fluidically connected to the external hydraulic system, and an exchanger-side duct (16) connected to the heat exchanger (15),
wherein the hydraulic connection body is a heating return body (11) of the hydraulic group, wherein the exchanger-side duct is a water heating outlet duct (16) fluidically connected to an inlet (15a) of the heat exchanger (15),
wherein the system-side duct comprises:
- a heating water inlet duct (11a) adapted to be fluidically connected to an outlet of a heating user system, said heating water inlet duct (11a) having a distal end (11a') fixed in a through hole (12a) obtained in the bracket or lower casing part (12) of the heating apparatus, said distal end (11a') being equipped with connection means (11a") for connection to the heating user system, or
- a sanitary hot water inlet duct (11b) adapted to be fluidically connected to an outlet of a sanitary hot water user system, said sanitary hot water inlet duct (11b) having a distal end (11b') fixed in a through hole (12b) obtained in the bracket or lower casing part (12) of the heating apparatus, said distal end (11b') being equipped with connection means (11b") for connection to the sanitary hot water user system,
wherein at least one of said ducts (11a; 16; 11b) is formed as a flexible tube at least partially of insulating material, wherein the exchanger-side duct (16) is formed as a flexible tube at least partially of insulating material.

3. Heating apparatus according to claim 1 or 2, wherein said insulating material is a thermally insulating or electrically insulating material.

4. Heating apparatus according to claim 3, wherein said insulating material is a polymer material.

5. Heating apparatus according to claim 4, wherein said insulating material is a non-elastomeric plastic material.

6. Heating apparatus according to any of the preceding claims, wherein said at least one duct (11a, 13b; 16, 18; 11b, 13c) formed as a flexible tube has a multi-layer structure.

7. Heating apparatus according to claim 6, wherein said at least one duct (11a, 13b; 16, 18; 11b, 13c) formed as a flexible tube comprises at least one polymer layer and at least one braided, woven or wound layer.

8. Heating apparatus according to claim 6, wherein said at least one duct (11a, 13b; 16, 18; 11b, 13c) formed as a flexible tube comprises at least one corrugated layer.

9. Heating apparatus according to claim 8, wherein said at least one duct (11a, 13b; 16, 18; 11b, 13c) formed as a flexible tube comprises at least one braided layer.

10. Heating apparatus according to any of the preceding claims, wherein said at least one duct (11a, 13b; 16, 18; 11b, 13c) formed as a flexible tube is capable of being bent with a bending radius comprised between 0.5 and 2 times the outer diameter of the tube, without changing the flow passage section of the tube at the bend.

11. Heating apparatus according to any of the preceding claims, comprising at least two of said ducts (11a, 13b; 16, 18; 11b, 13c) formed as flexible tubes having different outer colorings or graphic patterns.

12. Hydraulic connection body for a heating apparatus according to any of the preceding claims, comprising at least one temporary attachment formation (23, 25) provided for attachment of a free portion (16b, 18b) of said at least one duct (11a, 13b; 16, 18; 11b, 13c) formed as a flexible tube in a packing condition of the hydraulic connection body, said temporary attachment formation being formed on or mounted to the hydraulic connection body or a bracket (12) to which the hydraulic connection body is fixed, wherein said temporary attachment formation (23, 25) is adapted to engage by force- or form-fitting at least one of an outer surface and an inner surface of the free portion (16b, 18b) of said at least one duct (11a, 13b; 16, 18; 11b, 13c) formed as a flexible tube.

## Patentansprüche

1. Heizvorrichtung, umfassend
eine Halterung bzw. einen unteren Gehäuseteil (12),
einen Wärmetauscher (15) und
eine Hydraulikgruppe, die einen hydraulischen Verbindungskörper (13) umfasst, wobei der hydraulische Verbindungskörper auf einer Seite mit dem Wärmetauscher (15) verbunden ist und auf der anderen Seite angepasst ist, mit einem externen Hydrauliksystem verbunden zu sein bzw. zu werden,
wobei der hydraulische Verbindungskörper (13) einen systemseitigen Kanal (13b; 13c), der angepasst ist, fluidisch mit dem externen Hydrauliksystem verbunden zu sein bzw. zu werden, und einen tauscherseitigen Kanal (18) umfasst, der mit dem Wärmetauscher (15) verbunden ist,
wobei der hydraulische Verbindungskörper ein Wärmelieferkörper (13) der Hydraulikgruppe ist, wobei der tauscherseitige Kanal ein wassererwärmender Einlasskanal (18) ist, der fluidisch mit einem Auslass (15b) des Wärmetauschers (15) verbunden ist,
wobei der systemseitige Kanal umfasst:
- einen Heizwasserauslasskanal (13b), der angepasst ist, mit einem Einlass eines Heizungsverbrauchersystems fluidisch verbunden zu sein bzw. zu werden, wobei der Heizwasserauslasskanal (13b) ein distales Ende (13b') aufweist, das in einem Durchgangsloch (12c) fixiert bzw. befestigt ist, das in der Halterung oder dem unteren Gehäuseteil (12) der Heizvorrichtung enthalten ist, wobei das distale Ende (13b') mit Verbindungsmitteln (13b") zur Verbindung mit dem Heizungsverbrauchersystem ausgestattet ist, oder
- einen Sanitär-Warmwasserauslasskanal (13c), der angepasst ist, mit einem Einlass eines Sanitär-Warmwasserverbrauchersystems fluidisch verbunden zu sein bzw. zu werden, wobei der Sanitär-Warmwasserauslasskanal (13c) ein distales Ende (13c') aufweist, das in einem Durchgangsloch (12d) fixiert bzw. befestigt ist, das in der Halterung oder dem unteren Gehäuseteil (12) der Heizvorrichtung enthalten ist, wobei das distale Ende (13c') mit Verbindungsmitteln (13c") zur Verbindung mit dem Sanitär-Warmwasserverbrauchersystem ausgestattet ist,
wobei zumindest einer der Kanäle (13b; 18; 13c) als ein flexibler Schlauch zumindest teilweise aus Isoliermaterial ausgebildet ist, wobei der tauscherseitige Kanal (18) als ein flexibler Schlauch zumindest teilweise aus Isoliermaterial ausgebildet ist.

2. Heizvorrichtung, umfassend
eine Halterung bzw. einen unteren Gehäuseteil (12),
einen Wärmetauscher (15) und
eine Hydraulikgruppe, die einen hydraulischen Verbindungskörper (11) umfasst, wobei der hydraulische Verbindungskörper auf einer Seite mit dem Wärmetauscher (15) verbunden ist und auf der anderen Seite angepasst ist, mit einem externen Hydrauliksystem verbunden zu sein bzw. zu werden,
wobei der hydraulische Verbindungskörper (11) einen systemseitigen Kanal (11a; 11b), der angepasst ist, fluidisch mit dem externen Hydrauliksystem verbunden zu sein bzw. zu werden, und einen tauscherseitigen Kanal (16) umfasst, der mit dem Wärmetauscher (15) verbunden ist,
wobei der hydraulische Verbindungskörper ein Wärmerückluafkörper (11) der Hydraulikgruppe ist, wobei der tauscherseitige Kanal ein wassererwärmender Einlasskanal (16) ist, der fluidisch mit einem Einlass (15a) des Wärmetauschers (15) verbunden ist,
wobei der systemseitige Kanal umfasst:
- einen Heizwassereinlasskanal (11a), der angepasst ist, mit einem Auslass eines Heizungsverbrauchersystems fluidisch verbunden zu sein bzw. zu werden, wobei der Heizwassereinlasskanal (11a) ein distales Ende (11a') aufweist, das in einem Durchgangsloch (12a) fixiert bzw. befestigt ist, das in der Halterung oder dem unteren Gehäuseteil (12) der Heizvorrichtung enthalten ist, wobei das distale Ende (11a') mit Verbindungsmitteln (11 a") zur Verbindung mit dem Heizungsverbrauchersystem ausgestattet ist, oder
- einen Sanitär-Warmwassereinlasskanal (11b), der angepasst ist, mit einem Auslass eines Sanitär-Warmwasserverbrauchersystems fluidisch verbunden zu sein bzw. zu werden, wobei der Sanitär-Warmwassereinlasskanal (11b) ein distales Ende (11b') aufweist, das in einem Durchgangsloch (12b) fixiert bzw. befestigt ist, das in der Halterung oder dem unteren Gehäuseteil (12) der Heizvorrichtung enthalten ist, wobei das distale Ende (11b') mit Verbindungsmitteln (11b") zur Verbindung mit dem Sanitär-Warmwasserverbrauchersystem ausgestattet ist,
wobei zumindest einer der Kanäle (11a; 16, 11b) als ein flexibler Schlauch zumindest teilweise aus Isoliermaterial ausgebildet ist, wobei der tauscherseitige Kanal (16) als ein flexibler Schlauch zumindest teilweise aus Isoliermaterial ausgebildet ist.

3. Heizvorrichtung nach Anspruch 1 oder 2, wobei das Isoliermaterial ein thermisch isolierendes oder elektrisch isolierendes Material ist.

4. Heizvorrichtung nach Anspruch 3, wobei das Isoliermaterial ein Polymermaterial ist.

5. Heizvorrichtung nach Anspruch 4, wobei das Isoliermaterial ein nicht-elastomeres Kunststoffmaterial ist.

6. Heizvorrichtung nach einem der vorhergehenden Ansprüche, wobei der zumindest eine Kanal (11a, 13b; 16, 18; 11b, 13c), der als ein flexibler Schlauch ausgebildet ist, eine mehrschichtige Struktur aufweist.

7. Heizvorrichtung nach Anspruch 6, wobei der zumindest eine Kanal (11a, 13b; 16, 18; 11b, 13c), der als ein flexibler Schlauch ausgebildet ist, zumindest eine Polymerschicht und zumindest eine geflochtene, gewebte oder gewickelte Schicht umfasst.

8. Heizvorrichtung nach Anspruch 6, wobei der zumindest eine Kanal (11a, 13b; 16, 18; 11b, 13c), der als ein flexibler Schlauch ausgebildet ist, zumindest eine gewellte Schicht umfasst.

9. Heizvorrichtung nach Anspruch 8, wobei der zumindest eine Kanal (11a, 13b; 16, 18; 11b, 13c), der als ein flexibler Schlauch ausgebildet ist, zumindest eine geflochtene Schicht umfasst.

10. Heizvorrichtung nach einem der vorhergehenden Ansprüche, wobei der zumindest eine Kanal (11a, 13b; 16, 18; 11b, 13c), der als ein flexibler Schlauch ausgebildet ist, mit einem Biegeradius zwischen 0,5 und 2 Mal dem Außendurchmesser des Schlauchs gebogen werden kann, ohne den Strömungs- bzw. Durchflussquerschnitt des Schlauchs an der Biegung zu verändern.

11. Heizvorrichtung nach einem der vorhergehenden Ansprüche, umfassend zumindest zwei der Kanäle (11a, 13b; 16, 18; 11b, 13c), die als flexible Schläuche mit unterschiedlichen Außenfarben oder grafischen Mustern ausgebildet sind.

12. Hydraulischer Verbindungskörper für eine Heizvorrichtung nach einem der vorhergehenden Ansprüche, umfassend zumindest eine temporäre Anbringungsformation (23, 25), die zur Anbringung eines freien Abschnitts (16b, 18b) des zumindest einen Kanals (11a, 13b; 16, 18; 11b, 13c), der als ein flexibler Schlauch ausgebildet ist, in einem Packzustand des hydraulischen Verbindungskörpers bereitgestellt ist, wobei die temporäre Anbringungsformation an dem hydraulischen Verbindungskörper oder einer Halterung (12) ausgebildet oder montiert ist, an der der hydraulische Verbindungskörper fixiert bzw. befestigt ist, wobei die temporäre Anbringungsformation (23, 25) angepasst ist, durch Kraft- oder Formpassung in zumindest eine Außenfläche bzw. -oberfläche und eine Innenfläche bzw. -oberfläche des freien Abschnitts (16b, 18b) des zumindest einen Kanals (11a, 13b; 16, 18; 11b, 13c), der als ein flexibler Schlauch ausgebildet ist, einzugreifen.

## Revendications

1. Appareil de chauffage, comprenant
un support ou une partie de corps inférieur (12),
un échangeur de chaleur (15), et
un groupe hydraulique comprenant un corps de raccordement hydraulique (13), ledit corps de raccordement hydraulique étant raccordé d'un côté à l'échangeur de chaleur (15) et étant conçu de l'autre côté pour être raccordé à un système hydraulique externe,
dans lequel le corps de raccordement hydraulique (13) comprend un conduit côté système (13b ; 13c) conçu pour être raccordé fluidiquement au système hydraulique externe, et un conduit côté échangeur (18) raccordé à l'échangeur de chaleur (15),
dans lequel le corps de raccordement hydraulique est un corps de distribution de chauffage (13) du groupe hydraulique, dans lequel le conduit côté échangeur est un conduit d'entrée de chauffage d'eau (18) raccordé fluidiquement à une sortie (15b) de l'échangeur de chaleur (15),
dans lequel le conduit côté système comprend :
- un conduit de sortie d'eau de chauffage (13b) conçu pour être raccordé fluidiquement à une entrée d'un système utilisateur de chauffage, ledit conduit de sortie d'eau de chauffage (13b) présentant une extrémité distale (13b') fixée dans un trou traversant (12c) obtenu dans le support ou la partie de corps inférieur (12) de l'appareil de chauffage, ladite extrémité distale (13b') étant équipée de moyens de raccordement (13b") destinés à être raccordés au système utilisateur de chauffage, ou
- un conduit de sortie d'eau chaude sanitaire (13c) conçu pour être raccordé fluidiquement à une entrée d'un système utilisateur d'eau chaude sanitaire, ledit conduit de sortie d'eau chaude sanitaire (13c) présentant une extrémité distale (13c') fixée dans un trou traversant (12d) obtenu dans le support ou la partie de corps inférieur (12) de l'appareil de chauffage, ladite extrémité distale (13c') étant équipée de moyens de raccordement (13c") destinés à être raccordés au système utilisateur d'eau chaude sanitaire,
dans lequel au moins l'un desdits conduits (13b ; 18 ; 13c) forme un tuyau flexible au moins partiellement en matériau isolant, dans lequel le conduit côté échangeur (18) forme un tuyau flexible au moins partiellement en matériau isolant.

2. Appareil de chauffage, comprenant
un support ou une partie de corps inférieur (12),
un échangeur de chaleur (15), et
un groupe hydraulique comprenant un corps de raccordement hydraulique (11), ledit corps de raccordement hydraulique étant raccordé d'un côté à l'échangeur de chaleur (15) et étant conçu de l'autre côté pour être raccordé à un système hydraulique externe,
dans lequel le corps de raccordement hydraulique (11) comprend un conduit côté système (11a ; 11b) conçu pour être raccordé fluidiquement au système hydraulique externe, et un conduit côté échangeur (16) raccordé à l'échangeur de chaleur (15),
dans lequel le corps de raccordement hydraulique est un corps de retour de chauffage (11) du groupe hydraulique, dans lequel le conduit côté échangeur est un conduit de sortie de chauffage d'eau (16) raccordé fluidiquement à une entrée (15a) de l'échangeur de chaleur (15),
dans lequel le conduit côté système comprend :
- un conduit d'entrée d'eau de chauffage (11a) conçu pour être raccordé fluidiquement à une sortie d'un système utilisateur de chauffage, ledit conduit d'entrée d'eau de chauffage (11a) présentant une extrémité distale (11a') fixée dans un trou traversant (12a) obtenu dans le support ou la partie de corps inférieur (12) de l'appareil de chauffage, ladite extrémité distale (11a') étant équipée de moyens de raccordement (11a") destinés à être raccordés au système utilisateur de chauffage, ou
- un conduit d'entrée d'eau chaude sanitaire (11b) conçu pour être raccordé fluidiquement à une sortie d'un système utilisateur d'eau chaude sanitaire, ledit conduit d'entrée d'eau chaude sanitaire (11b) présentant une extrémité distale (11b') fixée dans un trou traversant (12b) obtenu dans le support ou la partie de corps inférieur (12) de l'appareil de chauffage, ladite extrémité distale (11b') étant équipée de moyens de raccordement (11b") destinés à être raccordés au système utilisateur d'eau chaude sanitaire,
dans lequel au moins l'un desdits conduits (11a ; 16 ; 11b) forme un tuyau flexible au moins partiellement en matériau isolant, dans lequel le conduit côté échangeur (16) forme un tuyau flexible au moins partiellement en matériau isolant.

3. Appareil de chauffage selon la revendication 1 ou 2, dans lequel ledit matériau isolant est un matériau isolant thermique ou isolant électrique.

4. Appareil de chauffage selon la revendication 3, dans lequel ledit matériau isolant est un matériau polymère.

5. Appareil de chauffage selon la revendication 4, dans lequel ledit matériau isolant est un matériau plastique non-élastomère.

6. Appareil de chauffage selon l'une quelconque des revendications précédentes, dans lequel ledit au moins un conduit (11a, 13b ; 16, 18 ; 11b, 13c) formant un tuyau flexible présente une structure multicouche.

7. Appareil de chauffage selon la revendication 6, dans lequel ledit au moins un conduit (11a, 13b ; 16, 18 ; 11b, 13c) formant un tuyau flexible comprend au moins une couche polymère et au moins une couche tressée, tissée ou enroulée.

8. Appareil de chauffage selon la revendication 6, dans lequel ledit au moins un conduit (11a, 13b ; 16, 18 ; 11b, 13c) formant un tuyau flexible comprend au moins une couche ondulée.

9. Appareil de chauffage selon la revendication 8, dans lequel ledit au moins un conduit (11a, 13b ; 16, 18 ; 11b, 13c) formant un tuyau flexible comprend au moins une couche tressée.

10. Appareil de chauffage selon l'une quelconque des revendications précédentes, dans lequel ledit au moins un conduit (11a, 13b ; 16, 18 ; 11b, 13c) formant un tuyau flexible est apte à être courbé selon un rayon de courbure compris entre 0,5 et 2 fois le diamètre extérieur du tube, sans modifier la section de passage d'écoulement du tuyau au niveau de la portion courbée.

11. Appareil de chauffage selon l'une quelconque des revendications précédentes, comprenant au moins deux desdits conduits (11a, 13b; 16, 18 ; 11b, 13c) formant des tuyaux flexibles présentant différents coloris ou motifs graphiques extérieurs.

12. Corps de raccordement hydraulique pour un appareil de chauffage selon l'une quelconque des revendications précédentes, comprenant au moins une formation de fixation temporaire (23, 25) fournie pour la fixation d'une partie libre (16b, 18b) dudit au moins un conduit (11a, 13b ; 16, 18 ; 11b, 13c) formant un tuyau flexible dans un état emballé du corps de raccordement hydraulique, ladite partie conformée de fixation temporaire étant formée ou montée sur le corps de raccordement hydraulique ou un support (12) auquel est fixé le corps de raccordement hydraulique, dans lequel ladite formation de fixation temporaire (23, 25) est conçue pour venir en prise par force ou correspondance de forme avec au moins une parmi une surface extérieure et une surface intérieure de la partie libre (16b, 18b) dudit au moins un conduit (11a, 13b ; 16, 18 ; 11b, 13c) formant un tuyau flexible.
